# EUROPEAN PATENT APPLICATION

(11) **EP 4 657 600 A1**
(43) Date of publication of application: **03.12.2025**
(21) Application number: 24736633.9
(22) Date of filing: 27.05.2024
(51) Int. Cl.: H01M 10/42, H01M 10/0525, C01G 49/00

(54) **LITHIUM-RICH LITHIUM IRON OXIDE MATERIAL, AND PREPARATION METHOD THEREFOR AND USE THEREOF**

(30) Priority: 16.04.2024 CN 202410460708
(71) Applicant: Hubei Wanrun New Energy Technology Co., Ltd., Shiyan, Hubei 442500 (CN); Lubei Wanrun Intelligent Energy Technology (Shandong) Co., Ltd, Binzhou, Shandong 251909 (CN)
(72) Inventor: LIU, Shiqi, Shiyan, Hubei 436070 (CN); SU, Xin, Ezhou, Hubei 436070 (CN); JIANG, Xuelin, Ezhou, Hubei 436070 (CN); YANG, Jiaojiao, Ezhou, Hubei 436070 (CN); GAO, Kai, Ezhou, Hubei 436070 (CN); XU, Sen, Ezhou, Hubei 436070 (CN); LIU, Canshang, Ezhou, Hubei 436070 (CN); ZHANG, Hao, Ezhou, Hubei 436070 (CN); WANG, Qin, Ezhou, Hubei 436070 (CN); PENG, Tangping, Ezhou, Hubei 436070 (CN); YU, Zhihao, Ezhou, Hubei 436070 (CN)
(74) Representative: Barker Brettell LLP
(86) International application number: PCT/CN2024/095570
(87) International publication number: WO 2025/217984

(57) **Abstract**

The present disclosure provides a lithium-rich lithium ferrite material, a preparation method therefor and an application thereof, and belongs to the field of cathode materials. The lithium-rich lithium ferrite material includes core-shell structured particles, and a core-shell structured particle includes an inner core, a first coating layer coated outside the inner core and a second coating layer coated outside the first coating layer, where the inner core is Li₅FeO₄, the first coating layer is a carbon layer, and the second coating layer is a mixed layer containing polyethylene oxide and a lithium salt; and a mass ratio of the first coating layer to the inner core is (2:100)-(10:100), and a mass ratio of the second coating layer to the inner core is (3:100)-(13:100). According to the present disclosure, convenience is provided for improving the air stability of the lithium ferrite material, and meanwhile, the ionic conductivity of an overall electrode can be improved.

## Description

### CROSS-REFERENCE TO RELATED APPLICATIONS

This application is based upon and claims the benefit of priority from Chinese Patent Application No. 202410460708.9, filed on April 16, 2014, the disclosure of which is incorporated herein by reference in its entirety.

### Technical Field

The present disclosure relates to the technical field of cathode materials of lithium-ion batteries, and specifically relates to a lithium-rich lithium ferrite material, a preparation method therefor and an application thereof.

### Background

With rapid development of the new energy field in China, lithium-ion batteries have been widely concerned, and the range issue of electric vehicles has always been the key to limit further development in the market. Although existing high-capacity anodes, such as a hard carbon anode and a silicon anode, have high capacities, more solid electrolyte interface films, namely SEI films, are formed, such that a large amount of Li⁺ is irreversibly consumed by cathodes, thereby seriously affecting overall capacities of the lithium-ion batteries. The Li⁺ consumed in forming the SEI films is made up for through a prelithiation method, which is a most effective solution to solve the problem of low initial efficiency of the high-capacity anodes.

In order to further promote use of new-generation high-capacity anodes in the lithium-ion batteries in the future, many prelithiation solutions have been developed at present to make the batteries matched with the anodes having high capacities and low initial efficiency and to compensate for the loss of active lithium in a first cycle. Prelithiation strategies mainly include cathode prelithiation and anode prelithiation, in which the anode prelithiation has been widely concerned in an early stage. In recent years, the cathode prelithiation strategy has received more and more attention due to the advantages of high safety, low price, easiness in synthesis, high rechargeability and the like.

Among lithium supplement agents used for the cathode prelithiation, Li₅FeO₄ has a theoretical specific capacity of 864 mAh·g⁻¹, which is theoretically enough to greatly improve capacity attenuation caused by combinations of the existing cathodes and new anode such as hard carbon and silicon oxide. Moreover, the Li₅FeO₄ can be well matched with the existing cathode materials, are compatible with existing binder systems and can be directly added to the cathode materials. In addition, the Li₅FeO₄ has a relatively low price compared with other lithium supplement agents, thus having a good disclosure prospect as a lithium-rich additive for the cathodes. However, the Li₅FeO₄ is extremely sensitive to water and CO₂ in the air and has poor stability in the air, so that its industrialization process is seriously affected.

### SUMMARY

In view of the technical problems in the background, the present disclosure provides a lithium-rich lithium ferrite material, a preparation method therefor and an application thereof, so as to improve the stability of the lithium-rich lithium ferrite material in the air.

In a first aspect, an embodiment of the present disclosure provides a lithium-rich lithium ferrite material. The lithium-rich lithium ferrite material includes core-shell structured particles, and a core-shell structured includes an inner core, a first coating layer coated outside the inner core and a second coating layer coated outside the first coating layer, where the inner core is Li₅FeO₄, the first coating layer is a carbon layer, and the second coating layer is a mixed layer containing polyethylene oxide and a lithium salt; and a mass ratio of the first coating layer to the inner core is (2:100)-(10:100), and a mass ratio of the second coating layer to the inner core is (3:100)-(13:100).

In the present disclosure, the provided lithium-rich lithium ferrite material is sequentially provided with the first coating layer and the second coating layer outside the inner core containing Li₅FeO₄, where the first coating layer is a carbon layer, and the second coating layer is a mixed layer containing polyethylene oxide (PEO) and a lithium salt. By sequentially arranging the first coating layer and the second coating layer outside the inner core, on the one hand, through double-layer coating, the Li₅FeO₄ in the inner core can be prevented from being affected by moisture and carbon dioxide in the air, and the air stability of the lithium-rich lithium ferrite material can be improved; and on the other hand, since the second coating layer, as an outermost layer, is a mixed layer containing polyethylene oxide and a lithium salt, the polyethylene oxide can improve the electrical conductivity of the material and improve the intensity and uniformity of the coating layer, and the lithium salt can further improve the electrical conductivity of the coating layer, thereby effectively improving the ionic conductivity of the lithium-rich lithium ferrite material.

In some embodiments, a mass ratio of the polyethylene oxide to the inner core is (0.5:100)-(5:100), and a mass ratio of the lithium salt to the inner core is (2:100)-(8:100).

In these embodiments, under the condition of same use amounts of other components, when the use amount of the polyethylene oxide is too high, particles of the lithium-rich lithium ferrite material will bond to each other; and when the use amount of the polyethylene oxide is too low, complete and continuous coating cannot be achieved. When the use amount of the lithium salt is too high, the content of the polyethylene oxide in the mixed layer is decreased, the viscosity between the carbon layer and the mixed layer is reduced, and the intensity of the mixed layer is reduced; and when the use amount of the lithium salt is too low, the electrical conductivity of the lithium-rich lithium ferrite material will be reduced.

In some embodiments, the mass ratio of the polyethylene oxide to the inner core is (0.5:100)-(2:100), and the mass ratio of the lithium salt to the inner core is (2:100)-(4:100).

In these embodiments, by adjusting the use amounts of the polyethylene oxide and the lithium salt in the second coating layer, when the mass ratio of the polyethylene oxide to the inner core is (0.5:100)-(2:100) and the mass ratio of the lithium salt to the inner core is (2:100)-(4:100), the electrical conductivity and the uniformity and continuity of coating can be taken into account, and the particles of the lithium-rich lithium ferrite material can be prevented from bonding to each other as much as possible.

In some embodiments, the mass ratio of the carbon layer to the inner core is (5:100)-(7:100).

In these embodiments, by setting the mass ratio of the carbon layer to the inner core at (5:100)-(7:100), on the one hand, continuous and uniform coating of the inner core with the carbon layer can be achieved; and on the other hand, the situation is avoided that other properties of the prepared lithium-rich lithium ferrite material are affected when the proportion of the carbon layer is too high, on the premise of maintaining a uniform coating of the inner core, such that the prepared lithium-rich lithium ferrite material has high capacity and stability.

In some embodiments, the lithium salt is selected from at least one of lithium bis(fluorosulfonyl)imide, lithium hexafluorophosphate and lithium fluoride.

In these embodiments, the electrical conductivity of the mixed layer can be effectively improved by selecting the lithium salt from at least one of the lithium bis(fluorosulfonyl)imide, the lithium hexafluorophosphate and the lithium fluoride.

In some embodiments, a molecular weight of the polyethylene oxide is 50,000 Da-150,000 Da.

In these embodiments, the polyethylene oxide with a high molecular weight can easily form a uniform and continuous polymer network structure and provide better ionic conductivity. However, when the molecular weight of the polyethylene oxide is too high, uniform coating on the surface of the carbon layer is difficult to achieve. Therefore, the polyethylene oxide with a molecular weight of 50,000 Da-150,000 Da is selected.

In some embodiments, a particle size (D90) of the inner core is 3 µm-5.5 µm.

In these embodiments, by controlling the particle size of the inner core, convenience is provided for controlling the particle size of the finally prepared lithium-rich lithium ferrite material within a small range, the lithium-rich lithium ferrite material with a small particle size is conducive to uniform mixing with other components in an active cathode material, and accordingly, relatively uniform distribution of the lithium-rich lithium ferrite material on a current collector is facilitated.

In some embodiments, an average thickness of the first coating layer is 5 nm-10 nm, and an average thickness of the second coating layer is 5 nm-10 nm.

In these embodiments, when uniform and continuous coating is achieved and the thickness of the coating layers is decreased, convenience is provided for ensuring the capacity of the lithium-rich lithium ferrite material, improving the electrical conductivity and maintaining a small particle size of the lithium-rich lithium ferrite material.

In a second aspect, an embodiment of the present disclosure provides a preparation method for the lithium-rich lithium ferrite material. The preparation method includes:
providing an inner core and a coating solution;
forming a first coating layer on a surface of the inner core to obtain an intermediate product;
and mixing the intermediate product with the coating solution, and forming a second coating layer on a surface of the first coating layer to obtain the lithium-rich lithium ferrite material;
where the coating solution includes a solvent, polyethylene oxide and a lithium salt.

In the present disclosure, the lithium-rich lithium ferrite material can be obtained by only coating the inner core containing Li₅FeO₄ in two steps, the preparation method is simple, and the lithium-rich lithium ferrite material with a small particle size (D90) of 3 µm-5.5 µm can be obtained. The prepared lithium-rich lithium ferrite material has good air stability and ionic conductivity.

In some embodiments, the step of forming a first coating layer on a surface of the inner core includes: subjecting the inner core, a carbon source and a grinding aid to mixing and ball milling, followed by carbonization treatment to obtain the intermediate product.

In these embodiments, more uniform mixing of the inner core and the carbon source is facilitated by using a ball milling method, where the grinding aid is removed before the carbonization treatment, the first coating layer (carbon layer) is formed on the surface of the inner core through the step of carbonization treatment, and that is to say, the intermediate product is obtained.

In some embodiments, the carbon source is selected from at least one of polypropylene, glucose and high-temperature coal tar pitch.

In these embodiments, all the polypropylene, the glucose and the high-temperature coal tar pitch have wide sources and cheap prices, so that reduction of the cost is facilitated. Particularly, the high-temperature coal tar pitch has high stability, and as the carbon source, has a more significant effect of improving the stability of the lithium-rich lithium ferrite material.

In some embodiments, the carbonization treatment is carried out at a temperature of 500 °C-700 °C for 1.5 h-3 h.

In these embodiments, when the carbonization temperature is too low, full carbonization cannot be achieved; and when the carbonization temperature is too high, a structure of the Li₅FeO₄ in the inner core will be affected. Therefore, in the embodiment, the carbonization temperature is selected at 500 °C-700 °C, and the time is 1.5 h-3 h, thus ensuring that the uniformly coated carbon layer can be formed without affecting the structure of the inner core.

In some embodiments, before forming the first coating layer on the surface of the inner core to obtain the intermediate product, the preparation method further includes preparing the inner core, the preparation method includes:
subjecting a first mixture of an iron source and a lithium source to calcination at 500 °C-700 °C for 24 h-48 h under an inert atmosphere.

In these embodiments, by subjecting the mixture of the iron source and the lithium source to calcination at 500 °C-700 °C for 24 h-48 h under an inert atmosphere, convenience is provided for carrying out a complete reaction between the iron source and the lithium source. When the calcination temperature is too low or the time is too short, a product has poor crystallinity; and when the calcination temperature is too high or the time is too long, structural damage will be caused, and a lithium supplement effect of the prepared lithium-rich lithium ferrite material will be affected.

In some embodiments, the iron source is Fe₂O₃.

In these embodiments, compared with other iron sources such as ferric hydroxide, the Fe₂O₃ is more conducive to obtaining the Li₅FeO₄ inner core with a small particle size.

In some embodiments, a particle size (D90) of the iron source is equal to or less than 400 nm.

In these embodiments, the particle size of the iron source affects the particle size of the inner core, thus affecting the particle size of the finally prepared lithium-rich lithium ferrite material. When the particle size of the iron source is too large, the particle size of the finally prepared lithium-rich lithium ferrite material is also large, so that uniform distribution of the material on a current collector is not facilitated. Preferably, the particle size (D90) of the iron source is 200 nm-400 nm. When the particle size (D90) of the iron source is 200 nm-400 nm, convenience is provided for obtaining the Li₅FeO₄ inner core with a small particle size.

In some embodiments, the lithium source is selected from at least one of lithium oxide, lithium hydroxide and lithium carbonate.

In these embodiments, the lithium oxide, the lithium hydroxide and the lithium carbonate have wide sources and are conducive to mass production, so that the industrial practicability of the method is improved.

In some embodiments, the lithium source is a second mixture of lithium oxide and lithium hydroxide.

In these embodiments, considering that the lithium carbonate has a too high decomposition temperature and great corrosion to containers, the lithium hydroxide has cakes heavily when separately used as the lithium source and the lithium oxide has a high cost, the second mixture of the lithium oxide and the lithium hydroxide is selected as the lithium source to reduce the cost and avoid caking.

In some embodiments, the lithium source is a second mixture of lithium oxide and lithium hydroxide at a molar ratio of (1.5-2.5):1.

In these embodiments, by setting the second mixture of the lithium oxide and the lithium hydroxide at a molar ratio of (1.5-2.5):1 as the lithium source, on the one hand, caking can be avoided, and on the other hand, convenience is provided for reducing the cost.

In some embodiments, a molar ratio of Fe to Li in the first mixture is (1:5.0)-(1:5.2).

In these embodiments, when slightly excessive lithium is introduced, convenience is provided for increasing the content of lithium in a lithium supplement agent, and improvement of a lithium supplement effect is facilitated.

In some embodiments, after the intermediate product is mixed with the coating solution, the solvent is removed, grinding and sieving are carried out, and the second coating layer is formed on the surface of the first coating layer to obtain the lithium-rich lithium ferrite material.

In these embodiments, the solvent may be selected from acetonitrile or solvents having similar polarity to the acetonitrile. The solvent is conducive to uniform and continuous coating of the polyethylene oxide and the lithium source on the surface of the intermediate product. It should be noted that considering only properties of the polyethylene oxide, although the polyethylene oxide with a high molecular weight can easily form a uniform and continuous polymer network structure, the polyethylene oxide with a too high molecular weight will lead to difficult dissolution in the solvent such as the acetonitrile, thereby affecting the continuity and uniformity of coating.

In a third aspect, an embodiment of the present disclosure provides a cathode plate. The cathode plate includes a current collector and an active material layer arranged on at least one side of the current collector, and the active material layer includes the lithium-rich lithium ferrite material according to any one of the foregoing statements or the lithium-rich lithium ferrite material prepared by the preparation method according to any one of the foregoing statements.

In these embodiments, the active material layer of the cathode plate includes the lithium-rich lithium ferrite material. Since the lithium-rich lithium ferrite material has significantly improved air stability, a lithium supplement effect of the material is achieved conveniently, and it can be ensured that an overall capacity of a battery is fully utilized when the cathode plate containing the material is applied to the battery.

In some embodiments, a mass fraction of the lithium-rich lithium ferrite material in the active material layer is 2 wt%-8 wt%, which is conducive to making up for Li⁺ consumed in forming an SEI film.

In a fourth aspect, an embodiment of the present disclosure provides a secondary battery including the cathode plate.

In these embodiments, since the secondary battery includes the cathode plate, a high capacity is maintained.

In a fifth aspect, an embodiment of the present disclosure provides an electrical device including the secondary battery.

In these embodiments, since the electrical device includes the secondary battery, the advantage of a long battery life is achieved.

The statements above are only an overview of technical solutions of the present disclosure. In order to make technical means of the present disclosure better understood, implementation can be carried out in accordance with contents of the specification. Moreover, in order to make the above purposes, other purposes, features and advantages of the present disclosure more clearly understood, specific embodiments of the present disclosure are particularly listed below.

### Brief Description of the Drawings

In order to illustrate the technical solutions of the present disclosure more clearly, drawings required to be used in the present disclosure are briefly introduced below. Obviously, the drawings described below are merely some embodiments of the present disclosure, and for persons of ordinary skill in the art, other drawings can also be obtained without exerting creative effort according to these drawings.
Fig. 1 is a structural schematic diagram of a lithium-rich lithium ferrite material in an embodiment of the present disclosure;
Fig. 2 is a flow chart of a preparation method for a lithium-rich lithium ferrite material in an embodiment of the present disclosure;
Fig. 3 is a flow chart of a preparation process for a lithium-rich lithium ferrite material in Embodiment 1 of the present disclosure;
Fig. 4 is a scanning electron microscopy (SEM) test image of the lithium-rich lithium ferrite material prepared in Embodiment 1 of the present disclosure;
Fig. 5 is a partial enlarged view of the SEM test image of the lithium-rich lithium ferrite material shown in Fig. 4;
Fig. 6 shows specific capacity data of lithium-rich lithium ferrite materials prepared in Embodiment 1 to Embodiment 3 of the present disclosure; and
Fig. 7 is an X-ray diffraction (XRD) test pattern of Li₅FeO₄ before and after coating in Embodiment 1 of the present disclosure.

Numerals in the above drawings are as follows:
1, Li₅FeO₄; 2, carbon layer; 3, mixed layer containing polyethylene oxide and a lithium salt.

### Detailed Description of the Embodiments

The embodiments in the technical solutions of the present disclosure are described in detail below in combination with the attached drawings. The following embodiments are merely used for illustrating the technical solutions of the present disclosure more clearly, which can only be used as embodiments and are not intended to limit the scope of protection of the present disclosure.

Unless otherwise defined, all technical terms and scientific terms used herein have same meanings as those generally understood by persons skilled in the technical field to which the present disclosure belongs. The terms used herein are used only for the purpose of describing specific embodiments and are not intended to limit the present disclosure. The terms "include" and "have" and any variations thereof in illustration of the specification and claims of the present disclosure as well as the drawings are intended to cover non-exclusive inclusions.

In description of the embodiments of the present disclosure, the technical terms "first" and "second" are used merely for distinguishing different objects and shall not be construed as indicating or implying relative importance or implying a quantity, a specific order or a primary or secondary relationship of indicated technical features. In description of the embodiments of the present disclosure, "a plurality of" means two or more, unless clearly and specifically defined otherwise.

Reference to the "embodiments" herein means that particular features, structures or characteristics described in conjunction with the embodiments may be included in at least one embodiment of the present disclosure. The phrase referred at various parts of the specification neither necessarily indicates same embodiments, nor indicates separate or alternative embodiments that are mutually exclusive with other embodiments. As understood explicitly and implicitly by persons skilled in the art, the embodiments described herein may be combined with other embodiments.

In description of the embodiments of the present disclosure, the term "and/or" merely shows an association relationship describing associated objects, indicating that three kinds of relationships may be expressed. For example, A and/or B may be expressed as in three situations, including separate presence of A, simultaneous presence of A and B, and separate presence of B. In addition, the character "/" herein generally means that former and latter associated objects have an "or" relationship.

In description of the embodiments of the present disclosure, the term "a plurality of" means two or more (including two). Similarly, "multiple groups" means two groups or more (including two groups), and "multiple pieces" means two pieces or more (including two pieces).

In description of the embodiments of the present disclosure, orientation or position relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial" and "circumferential" are orientation or position relationships as shown in the attached drawings, only for the purposes of conveniently describing the embodiments of the present disclosure and simplifying the description, and are not intended to indicate or imply that a device or an element referred to needs to have a specific orientation or is constructed and operated in a specific orientation. Therefore, such terms cannot be understood as limitations of the embodiments of the present disclosure.

Due to a high theoretical specific capacity, good matching with existing cathode materials, good compatibility with existing binders and a relatively low price, Li₅FeO₄ has a good application prospect. However, the Li₅FeO₄ is extremely sensitive to water and CO₂ in the air and has poor stability in the air, so that an industrialization process is seriously affected. In order to solve the technical problem of poor stability of a lithium-rich lithium ferrite material in the air, the present disclosure provides a lithium-rich lithium ferrite material, a preparation method therefor, a cathode plate, a secondary battery and an electrical device. By arranging a carbon layer and a mixed layer composed of polyethylene oxide and a lithium salt outside an inner core containing Li₅FeO₄, a technical effect of improving the stability of the lithium-rich lithium ferrite material in the air can be achieved, and accordingly, the electrical performance of the cathode plate, the secondary battery and the electrical device can also be improved.

The electrical device provided in the embodiments of the present disclosure may include, but is not limited to, mobile phones, tablet computers, laptop computers, electric toys, electric tools, electromobiles, electric vehicles, ships, spacecrafts and the like. The electric toys may include fixed or mobile electric toys, such as game machines, electric car toys, electric ship toys, electric airplane toys and the like, and the spacecrafts may include airplanes, rockets, space shuttles, spaceships and the like.

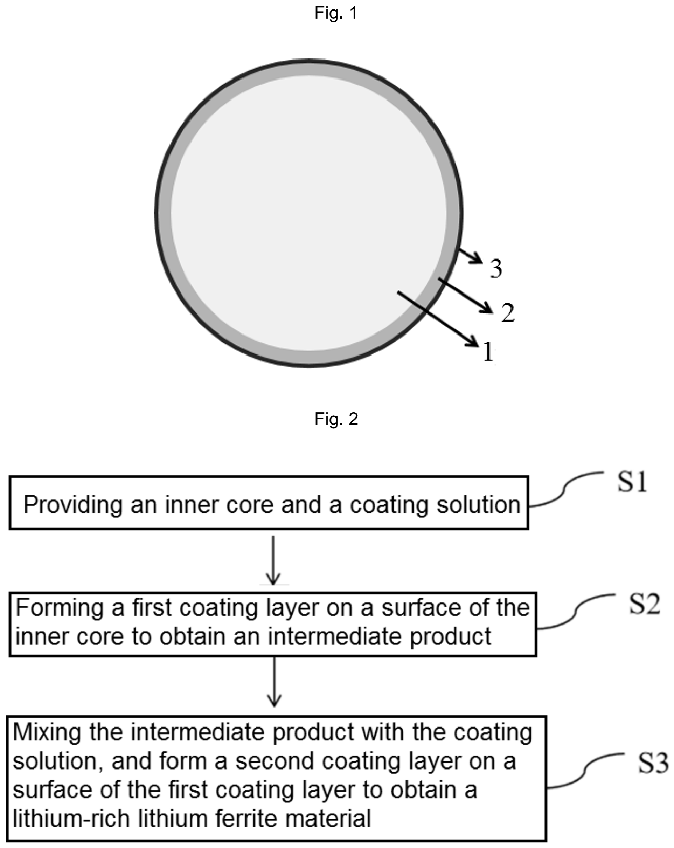

With reference to Fig. 1, in a first aspect, an embodiment of the present disclosure provides a lithium-rich lithium ferrite material. The lithium-rich lithium ferrite material includes core-shell structured particles, and a core-shell structured particle includes an inner core, a first coating layer coated outside the inner core and a second coating layer coated outside the first coating layer, where the inner core is Li₅FeO₄, the first coating layer is a carbon layer, and the second coating layer is a mixed layer containing polyethylene oxide and a lithium salt; and a mass ratio of the first coating layer to the inner core is (2:100)-(10:100), and a mass ratio of the second coating layer to the inner core is (3:100)-(13:100).

The lithium-rich lithium ferrite material of the present disclosure is sequentially provided with the first coating layer and the second coating layer outside the inner core containing Li₅FeO₄, where the first coating layer is a carbon layer, and the second coating layer is a mixed layer containing polyethylene oxide and a lithium salt. By sequentially arranging the first coating layer and the second coating layer outside the inner core, on the one hand, through double-layer coating, the Li₅FeO₄ in the inner core can be prevented from being affected by moisture and carbon dioxide in the air, and the air stability of the lithium-rich lithium ferrite material can be improved; and on the other hand, since the second coating layer, as an outermost layer, is a mixed layer, namely a solid electrolyte layer, containing polyethylene oxide and a lithium salt, the electrical conductivity and ionic conductivity of the whole lithium-rich lithium ferrite material can be improved.

The mass ratio of the first coating layer to the inner core is (2:100)-(10:100), and the mass ratio of the second coating layer to the inner core is (3:100)-(13:100). As for the first coating layer, since the carbon layer has a low specific capacity, the overall capacity of the prepared lithium-rich lithium ferrite material will be decreased when the proportion of the carbon layer is too large. However, when the proportion of the carbon layer is too small, complete and continuous coating cannot be achieved, and thus the inner core containing Li₅FeO₄ cannot be effectively isolated from the air. As for the second coating layer, when the proportion of the mixed layer is too large, particles of the prepared lithium-rich lithium ferrite material will bond to each other, thereby increasing the particle size of the lithium-rich lithium ferrite material. However, when the proportion of the mixed layer is too small, complete and continuous coating cannot be achieved, and thus the inner core containing Li₅FeO₄ cannot be effectively isolated from the air. Meanwhile, the electrical conductivity and ionic conductivity of the whole lithium-rich lithium ferrite material will be affected. Therefore, a small proportion of the second coating layer capable of forming a complete and continuous coating layer is selected as much as possible.

Specifically, the mass ratio of the first coating layer to the inner core may be 2:100, 4:100, 6:100, 8:100, 10:100 or any value of (2:100)-(10:100). Preferably, the mass ratio of the first coating layer to the inner core is (5:100)-(7:100). The mass ratio of the second coating layer to the inner core may be 3:100, 5:100, 7:100, 9:100, 11:100, 13:100 or any value of (3:100)-(13:100).

In some embodiments, a mass ratio of the polyethylene oxide to the inner core is (0.5:100)-(5:100), and a mass ratio of the lithium salt to the inner core is (2:100)-(8:100). Preferably, the mass ratio of the polyethylene oxide to the inner core is (0.5:100)-(2:100), and the mass ratio of the lithium salt to the inner core is (2:100)-(4:100).

On the one hand, the polyethylene oxide, used as a solid electrolyte, can improve the electrical conductivity of the material; and on the other hand, the polyethylene oxide has a certain bonding property and can improve the intensity and uniformity of the coating layer. The lithium salt can further improve the electrical conductivity of the coating layer. Under the condition of same use amounts of other components, when the use amount of the polyethylene oxide is too high, particles of the lithium-rich lithium ferrite material will bond to each other; and when the use amount of the polyethylene oxide is too low, complete and continuous coating cannot be achieved. When the use amount of the lithium salt is too high, the content of the polyethylene oxide in the mixed layer is decreased, the viscosity between the carbon layer and the mixed layer is reduced, and the intensity of the mixed layer is reduced; and when the use amount of the lithium salt is too low, the electrical conductivity of the lithium-rich lithium ferrite material will be reduced.

Specifically, the mass ratio of the polyethylene oxide to the inner core may be 0.5:100, 1:100, 2:100, 1.4:100, 3:100, 4:100, 5:100 or any value of (0.5:100)-(5:100). The mass ratio of the lithium salt to the inner core may be 2:100, 3:100, 4:100, 5:100, 6:100, 7:100, 8:100 or any value of (2:100)-(8:100).

In some embodiments, the lithium salt is selected from at least one of lithium bis(fluorosulfonyl)imide, lithium hexafluorophosphate and lithium fluoride, may specifically be one of lithium bis(fluorosulfonyl)imide, lithium hexafluorophosphate and lithium fluoride, and may also be a mixture of bis(fluorosulfonyl)imide and lithium hexafluorophosphate, a mixture of lithium hexafluorophosphate and lithium fluoride or a mixture of lithium bis(fluorosulfonyl)imide, lithium hexafluorophosphate and lithium fluoride.

In some embodiments, a molecular weight of the polyethylene oxide is 50,000 Da-150,000 Da, which may specifically be 50,000 Da, 70,000 Da, 90,000 Da, 110,000 Da, 130,000 Da, 150,000 Da or any value of 50,000 Da-150,000 Da, so that convenience is provided for forming a uniform and continuous polymer network structure and providing better ionic conductivity.

In some embodiments, a particle size (D90) of the inner core is 3 µm-5.5 µm, which may specifically be 3 µm, 3.5 µm, 4 µm, 4.5 µm, 5 µm, 5.5 µm or any value of 3 µm-5.5 µm.

In some embodiments, an average thickness of the first coating layer is 5 nm-10 nm, which may specifically be 5 nm, 6 nm, 7 nm, 8 nm, 9 nm, 10 nm or any value of 5 nm-10 nm.

In some embodiments, an average thickness of the second coating layer is 5 nm-10 nm, which may specifically be 5 nm, 6 nm, 7 nm, 8 nm, 9 nm, 10 nm or any value of 5 nm-10 nm.

In a second aspect, an embodiment of the present disclosure provides a preparation method for the lithium-rich lithium ferrite material according to any one of the foregoing statements. As shown in Fig. 2, the preparation method includes:
S1, providing an inner core and a coating solution;
S2, forming a first coating layer on a surface of the inner core to obtain an intermediate product;
S3, mixing the intermediate product with the coating solution, and forming a second coating layer on a surface of the first coating layer to obtain the lithium-rich lithium ferrite material;
where the coating solution includes a solvent, polyethylene oxide and a lithium salt.

According to the preparation method of the present embodiment, the lithium-rich lithium ferrite material can be obtained by only coating the inner core containing Li₅FeO₄ in two steps, the preparation method is simple, and the lithium-rich lithium ferrite material with a small particle size (D90) of 3 µm-5.5 µm can be obtained.

Specifically, in step S1, a preparation method for the inner core includes:
subjecting a first mixture of an iron source and a lithium source to calcination at 500 °C-700 °C for 24 h-48 h under an inert atmosphere, where the calcination temperature may be 500 °C, 550 °C, 600 °C, 650 °C, 700 °C or any value of 500 °C-700 °C, and the calcination time may be 24 h, 28 h, 32 h, 36 h, 40 h, 44 h, 48 h or any value of 24 h-48 h.

In some embodiments, the iron source and the lithium source can be evenly mixed by a mixer, and the mixing time can be adjusted according to a capacity and a rotation speed of the mixer to ensure that the iron source and the lithium source are evenly mixed as much as possible.

In some embodiments, in the step of calcination, the first mixture can be sent into a sintering furnace for calcination, an inert gas is introduced in advance, and an introduced amount of the inert gas is 5 m³/h-10 m³/h to make an oxygen content in the sintering furnace less than 1 ppm and a humidity less than 5% so as to avoid a reaction between carbon dioxide, water and the first mixture. Then, the sintering furnace is heated to carry out calcination, and a heating rate is 3 °C/min-7 °C/min.

In some embodiments, the iron source is Fe₂O₃, and a particle size (D90) of the iron source is equal to or less than 400 nm and may specifically be 400 nm, 350 nm, 300 nm, 250 nm, 200 nm, 150 nm or any value equal to or less than 400 nm. Preferably, the particle size (D90) of the iron source is 200 nm-400 nm.

In some embodiments, the lithium source is selected from at least one of lithium oxide, lithium hydroxide and lithium carbonate. Preferably, the lithium source is a second mixture of lithium oxide and lithium hydroxide. Specifically, the lithium source is the mixture of the lithium oxide and the lithium hydroxide at a molar ratio of (1.5-2.5):1. For example, the molar ratio of the lithium oxide to the lithium hydroxide may be 1.5:1, 1.7:1, 1.9:1, 2.1:1, 2.3:1, 2.5:1 or any value of (1.5-2.5):1.

In some embodiments, a molar ratio of Fe to Li in the second mixture of the iron source and the lithium sources is 1:(5.0-5.2) and may specifically be 1:5.0, 1:5.05, 1:5.1, 1:5.15, 1:5.2 or any value of 1:(5.0-5.2).

It should be noted that the Li₅FeO₄ obtained in the embodiment needs to be pulverized before use. Specifically, an air jet pulverization method can be used for pulverization. For example, the sintered Li₅FeO₄ is subjected to air jet pulverization and maintained at a dew point of less than -30 °C to obtain pure-phase Li₅FeO₄ with a particle size of 3 µm-5.5 µm.

Specifically, in step S2, the step of forming a first coating layer on a surface of the inner core includes: subjecting the inner core, a carbon source and a grinding aid to mixing and ball milling, followed by carbonization treatment to obtain the intermediate product.

In the embodiment, the inner core and the carbon source are evenly mixed by a ball milling method, a rotation speed can be set at 300 rpm-600 rpm during the ball milling, a time is 1 h-5 h, and a ball-to-powder weight ratio is (8-12):1. The grinding aid needs to be removed before the carbonization treatment, the grinding aid is an alcohol compound, such as ethanol, and a method for removing the grinding aid may include carrying out drying to volatilize the grinding aid.

In some embodiments, the carbon source is selected from at least one of polypropylene, glucose and high-temperature coal tar pitch. For example, the carbon source may be polypropylene, glucose, high-temperature coal tar pitch, a mixture of polypropylene and glucose, a mixture of glucose and high-temperature coal tar pitch or a mixture of polypropylene, glucose and high-temperature coal tar pitch.

It should be noted that the coal tar pitch is a multiphase system basically composed of aliphatic hydrocarbons, cycloalkanes, polycyclic hydrocarbons, condensed rings, heterocyclic aromatic hydrocarbons and the like. Due to a glass phase at normal temperature and easiness in softening and then melting by heating, the coal tar pitch is divided into, by the softening point, low-temperature coal tar pitch (CTPD) with a softening point of equal to or less than 75 °C, medium-temperature coal tar pitch (CTPZ) with a softening point of 75.95 °C and high-temperature coal tar pitch (CTPG) with a softening point of equal to or greater than 95 °C.

In some embodiments, the carbonization treatment is carried out at a temperature of 500 °C-700 °C, and the temperature may specifically be 500 °C, 550 °C, 600 °C, 650 °C, 700 °C or any value of 500 °C-700 °C. A time is 1.5 h-3 h, and the time may specifically be 1.5 h, 2 h, 2.5 h, 3 h or any value of 1.5 h-3 h.

In the present disclosure, the step of carbonization treatment includes placing the Li₅FeO₄ precursor coated with the carbon source in a sintering furnace for high-temperature calcination. In order to reduce oxidation of the carbon source, an inert gas needs to be introduced in advance, and an introduced amount of the inert gas may be 3 m³/h-7 m³/h to make an oxygen content in the sintering furnace less than 1 ppm and a humidity less than 5% so as to avoid the situation that a carbonization process is affected by a reaction between oxygen, water and the carbon source. Then, the sintering furnace is heated to 500 °C-700 °C at a heating rate of 3 °C/min-7 °C/min, heat preservation is carried out for 1.5 h-3 h to obtain an intermediate product, and the intermediate product is subjected to air jet pulverization and maintained at a dew point of less than -30 °C to obtain an intermediate product with a particle size of 3 µm-5.5 µm.

Specifically, in step S3, after the intermediate product is mixed with the coating solution, the solvent is removed, and grinding and sieving are carried out to obtain the lithium-rich lithium ferrite material. The solvent may be selected from acetonitrile or solvents having similar polarity to the acetonitrile, use amount of the solvent needs to be sufficient for complete dissolution of the polyethylene oxide. When the use amount of the solvent is too large, the solvent can be removed subsequently by drying without causing a great impact on overall performance of the material, but the time for removing the solvent will be prolonged, energy consumption is increased, and the production efficiency and the cost are affected. However, when the use amount of the solvent is too small, the polyethylene oxide cannot be completely dissolved, such that the uniformity and continuity of the coating layer are affected.

Further, in the coating solution, a mass ratio of the polyethylene oxide to the lithium salt is (20-50):100, which may specifically be 20:100, 30:100, 40:100, 50:100 or any value of (20-50):100, preferably (30-40):100. By adjusting the ratio of the polyethylene oxide to the lithium salt, when the mass ratio of the polyethylene oxide to the inner core is (0.5:100)-(2:100), the mass ratio of the lithium salt to the inner core is (2:100)-(4:100) and the mass ratio of the polyethylene oxide to the lithium salt is (20-50):100, the electrical conductivity and the uniformity and continuity of coating can be taken further into account, and particles of the lithium-rich lithium ferrite material can be prevented from bonding to each other.

Further, a removal rate of the solvent can be increased by heating in the process of removing the solvent, but a temperature is not too high to prevent the structure of the lithium-rich lithium ferrite material from being damaged. In addition, after the solvent is removed, the lithium-rich lithium ferrite material can be crushed, and air jet pulverization may specifically be used as a crushing method to reduce the particle size.

In a third aspect, an embodiment of the present disclosure provides a cathode plate. The cathode plate includes a cathode current collector and an active material layer arranged on at least one side of the cathode current collector, and the active material layer includes the lithium-rich lithium ferrite material according to any one of the foregoing statements or the lithium-rich lithium ferrite material prepared by the preparation method according to any one of the foregoing statements.

In some embodiments, a mass fraction of the lithium-rich lithium ferrite material in the active material layer is 2 wt%-8 wt%, which may specifically be 2 wt%, 3 wt%, 4 wt%, 5 wt%, 6 wt%, 7 wt%, 8 wt% or any value of 2 wt%-8 wt%, and a specific use amount can be determined according to lithium supplement efficiency.

In a fifth aspect, an embodiment of the present disclosure provides an electrical device, such as a vehicle, including the secondary battery described in the above embodiment.

Some specific embodiments are listed below. It should be noted that the embodiments described below are illustrative, which are intended only to explain the present disclosure and shall not be understood as limitations of the present disclosure. Processes that do not have specific technologies or conditions in the embodiments are carried out according to the technologies or conditions described in documents in the art or specifications of products. Reagents or instruments used without specific manufacturers are conventional products available on the market.

### 1. Preparation method

### Embodiment 1

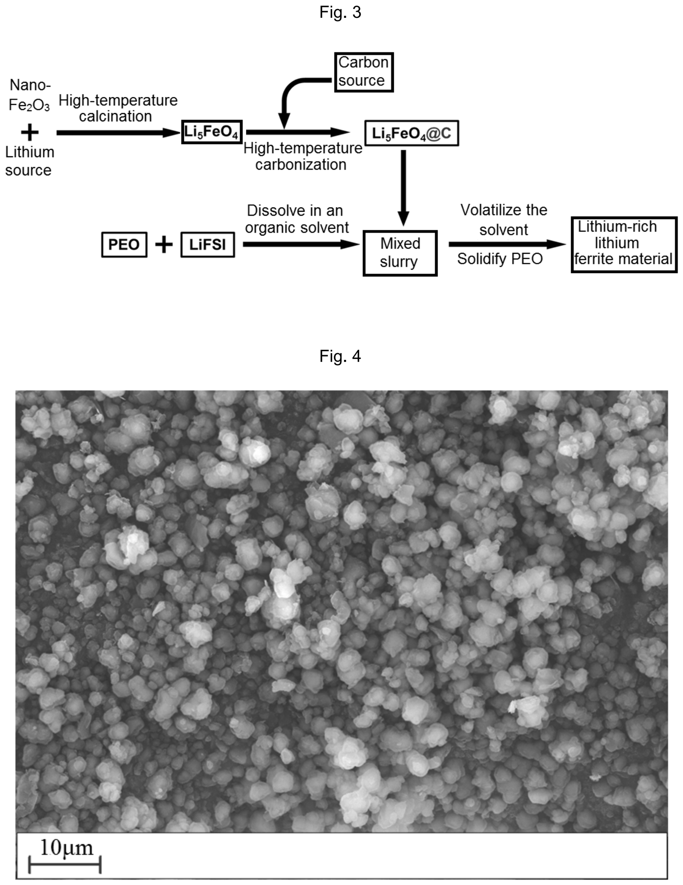

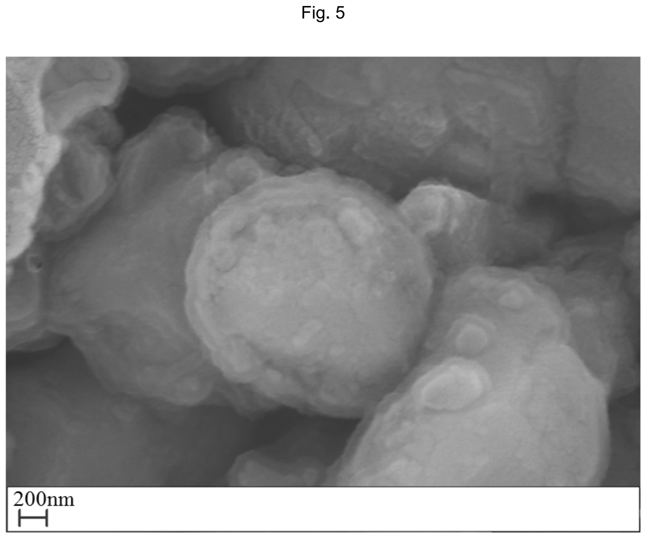

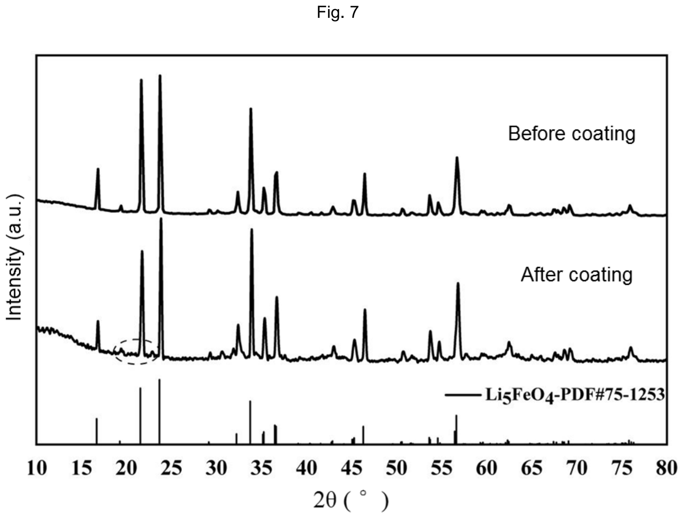

The present embodiment provided a preparation method for a lithium-rich lithium ferrite material. The preparation method included the following steps.
(1) Nano-Fe₂O₃ with a particle size (D90) of 300 nm, Li₂O and LiOH were weighed, Fe:Li=1:5.1 (the ratio was a molar ratio of the element Fe to the element Li, same below), and a ratio of the LiOH to the Li₂O in a lithium source was 1:2 (the ratio was a molar ratio of the LiOH to the Li₂O, same below). The above compounds were placed in a mixer and stirred for 30 min until being evenly mixed to obtain a mixed raw material.
(2) The mixed raw material was sent into a sintering furnace for calcination, high-purity nitrogen was introduced in advance at an amount of 5 m³/h to make an oxygen content less than 1 ppm and a humidity less than 5%, and then the sintering furnace was heated to 600 °C at a heating rate of 5 °C/min and subjected to heat preservation for 36 h to obtain pure-phase Li₅FeO₄.
(3) The sintered Li₅FeO₄ was subjected to air jet pulverization and maintained at a dew point of less than -30 °C to obtain pure-phase Li₅FeO₄ with a small particle size.
(4) 200 g of the pulverized Li₅FeO₄, 20 g of high-temperature coal tar pitch and an appropriate amount of anhydrous ethanol were weighed, evenly mixed and then placed in a ball mill for ball milling at a ball-to-powder weight ratio of 10:1 at 450 rpm for 3 h to make the high-temperature coal tar pitch coated on the Li₅FeO₄ so as to obtain a Li₅FeO₄ precursor coated with high-temperature coal tar pitch.
(5) The Li₅FeO₄ precursor coated with high-temperature coal tar pitch was placed in a sintering furnace for high-temperature calcination, high-purity nitrogen was introduced in advance at an amount of 5 m³/h to make an oxygen content less than 1 ppm and a humidity less than 5%, then the sintering furnace was heated to 550 °C at a heating rate of 5 °C/min and subjected to heat preservation for 2 h, and a product was subjected to air jet pulverization and maintained at a dew point of less than -30 °C to obtain Li₅FeO₄@C, where a mass ratio of a carbon layer to an inner core Li₅FeO₄ was 6:100.
(6) Polyethylene oxide (with a molecular weight of 100,000 Da) and LIFSI (lithium bis(fluorosulfonyl)imide) (polyethylene oxide monomer:LIFSI=40:100 (the ratio was a mass ratio of the polyethylene oxide monomer to the lithium bis(fluorosulfonyl)imide, same below)) were placed in anhydrous acetonitrile and stirred for 3 h for complete dissolution to obtain a coating solution. The Li₅FeO₄@C was placed in the coating solution (a mass ratio of the polyethylene oxide to the Li₅FeO₄ was 1:100) and stirred for volatilizing until the acetonitrile was completely volatilized. A product was subjected to air jet pulverization to obtain a lithium-rich lithium ferrite material (where a mass ratio of the polyethylene oxide to the Li₅FeO₄ was 1:100, a mass ratio of the LIFSI to the Li₅FeO₄ was 2.5:100, and a mass ratio of a second coating layer to the Li₅FeO₄ was 3.5:100). SEM images and an XRD pattern are shown in Fig. 4, Fig. 5 and Fig. 7, respectively.

### Embodiment 2

The present embodiment provided a preparation method for a lithium-rich lithium ferrite material. Different from Embodiment 1, the content of a carbon layer was decreased until a mass ratio of the carbon layer to an inner core Li₅FeO₄ was 2:100.

### Embodiment 3

The present embodiment provided a preparation method for a lithium-rich lithium ferrite material. Different from Embodiment 1, the content of a carbon layer was increased until a mass ratio of the carbon layer to an inner core Li₅FeO₄ was 8:100.

### Embodiment 4

The present embodiment provided a preparation method for a lithium-rich lithium ferrite material. Different from Embodiment 1, the content of a carbon layer was increased until a mass ratio of the carbon layer to an inner core Li₅FeO₄ was 10:100.

### Embodiment 5

The present embodiment provided a preparation method for a lithium-rich lithium ferrite material. The preparation method included the following steps.
(1) Nano-Fe₂O₃ with a particle size (D90) of 300 nm, Li₂O and LiOH were weighed, Fe:Li=1:5.1, and a ratio of the LiOH to the Li₂O in a lithium source was 1:2. The above compounds were placed in a mixer and stirred for 30 min until being evenly mixed to obtain a mixed raw material.
(2) The mixed raw material was sent into a sintering furnace for calcination, high-purity nitrogen was introduced in advance at an amount of 5 m³/h to make an oxygen content less than 1 ppm and a humidity less than 5%, and then the sintering furnace was heated to 600 °C at a heating rate of 5 °C/min and subjected to heat preservation for 36 h to obtain pure-phase Li₅FeO₄.
(3) The sintered Li₅FeO₄ was subjected to air jet pulverization and maintained at a dew point of less than -30 °C to obtain pure-phase Li₅FeO₄ with a small particle size.
(4) 200 g of the pulverized Li₅FeO₄, 20 g of polypropylene and an appropriate amount of anhydrous ethanol were weighed, evenly mixed and then placed in a ball mill for ball milling at a ball-to-powder weight ratio of 10:1 at 450 rpm for 3 h to make the polypropylene coated on the Li₅FeO₄ so as to obtain a Li₅FeO₄ precursor coated with polypropylene.
(5) The Li₅FeO₄ precursor coated with polypropylene was placed in a sintering furnace for high-temperature calcination, high-purity nitrogen was introduced in advance at an amount of 5 m³/h to make an oxygen content less than 1 ppm and a humidity less than 5%, then the sintering furnace was heated to 400 °C at a heating rate of 5 °C/min and subjected to heat preservation for 2 h, and a product was subjected to air jet pulverization and maintained at a dew point of less than -30 °C to obtain Li₅FeO₄@C, where a mass ratio of a carbon layer to an inner core Li₅FeO₄ was 6:100.
(6) Polyethylene oxide (with a molecular weight of 100,000 Da) and LIFSI (polyethylene oxide monomer:LIFSI=40:100) were placed in anhydrous acetonitrile and stirred for 3 h for complete dissolution to obtain a solution. The Li₅FeO₄@C was placed in the solution and stirred for volatilizing until the acetonitrile was completely volatilized. A product was subjected to air jet pulverization to obtain a lithium-rich lithium ferrite material (where a mass ratio of the polyethylene oxide to the Li₅FeO₄ was 1:100, a mass ratio of the LIFSI to the Li₅FeO₄ was 2.5:100, and a mass ratio of a second coating layer to the Li₅FeO₄ was 3.5:100).

### Embodiment 6

The present embodiment provided a preparation method for a lithium-rich lithium ferrite material. Different from Embodiment 5, the content of a carbon layer was decreased until a mass ratio of the carbon layer to an inner core Li₅FeO₄ was 2:100.

### Embodiment 7

The present embodiment provided a preparation method for a lithium-rich lithium ferrite material. Different from Embodiment 5, the content of a carbon layer was increased until a mass ratio of the carbon layer to an inner core Li₅FeO₄ was 8:100.

### Embodiment 8

The present embodiment provided a preparation method for a lithium-rich lithium ferrite material. Different from Embodiment 5, the content of a carbon layer was increased until a mass ratio of the carbon layer to an inner core Li₅FeO₄ was 10:100.

### Embodiment 9

The present embodiment provided a preparation method for a lithium-rich lithium ferrite material. The preparation method includes the following steps.
(1) Nano-Fe₂O₃ with a particle size (D90) of 300 nm, Li₂O and LiOH were weighed, Fe:Li=1:5.1, and a ratio of the LiOH to the Li₂O in a lithium source was 1:2. The above compounds were placed in a mixer and stirred for 30 min until being evenly mixed to obtain a mixed raw material.
(2) The mixed raw material was sent into a sintering furnace for calcination, high-purity nitrogen was introduced in advance at an amount of 5 m³/h to make an oxygen content less than 1 ppm and a humidity less than 5%, and then the sintering furnace was heated to 600 °C at a heating rate of 5 °C/min and subjected to heat preservation for 36 h to obtain pure-phase Li₅FeO₄.
(3) The sintered Li₅FeO₄ was subjected to air jet pulverization and maintained at a dew point of less than -30 °C to obtain pure-phase Li₅FeO₄ with a small particle size.
(4) 200 g of the pulverized Li₅FeO₄, 60 g of glucose and an appropriate amount of anhydrous ethanol were weighed, evenly mixed and then placed in a ball mill for ball milling at a ball-to-powder weight ratio of 10:1 at 450 rpm for 3 h to make the glucose coated on the Li₅FeO₄ so as to obtain a Li₅FeO₄ precursor coated with glucose.
(5) The Li₅FeO₄ precursor coated with glucose was placed in a sintering furnace for high-temperature calcination, high-purity nitrogen was introduced in advance at an amount of 5 m³/h to make an oxygen content less than 1 ppm and a humidity less than 5%, then the sintering furnace was heated to 400 °C at a heating rate of 5 °C/min and subjected to heat preservation for 2 h, and a product was subjected to air jet pulverization and maintained at a dew point of less than -30 °C to obtain Li₅FeO₄@C, where a mass ratio of a carbon layer to an inner core Li₅FeO₄ was 6:100.
(6) Polyethylene oxide (with a molecular weight of 100,000 Da) and LIFSI (polyethylene oxide monomer:LIFSI=40:100) were placed in anhydrous acetonitrile and stirred for 3 h for complete dissolution to obtain a solution. The Li₅FeO₄@C was placed in the solution and stirred for volatilizing until the acetonitrile was completely volatilized. A product was subjected to air jet pulverization to obtain a lithium-rich lithium ferrite material (where a mass ratio of the polyethylene oxide to the Li₅FeO₄ was 1%, a mass ratio of the LIFSI to the Li₅FeO₄ was 2.5:100, and a mass ratio of a second coating layer to the Li₅FeO₄ was 3.5:100).

### Embodiment 10

The present embodiment provided a preparation method for a lithium-rich lithium ferrite material. Different from Embodiment 9, the content of a carbon layer was decreased until a mass ratio of the carbon layer to an inner core Li₅FeO₄ was 2:100.

### Embodiment 11

The present embodiment provided a preparation method for a lithium-rich lithium ferrite material. Different from Embodiment 9, the content of a carbon layer was increased until a mass ratio of the carbon layer to an inner core Li₅FeO₄ was 8:100.

### Embodiment 12

The present embodiment provided a preparation method for a lithium-rich lithium ferrite material. Different from Embodiment 9, the content of a carbon layer was increased until a mass ratio of the carbon layer to an inner core Li₅FeO₄ was 10:100.

### Embodiment 13

The present embodiment provided a preparation method for a lithium-rich lithium ferrite material. Different from Embodiment 1, a mass ratio of polyethylene oxide to Li₅FeO₄ was 0.5:100, a mass ratio of LIFSI to the Li₅FeO₄ was 2.5:100, and a mass ratio of a second coating layer to the Li₅FeO₄ was 3:100.

### Embodiment 14

The present embodiment provided a preparation method for a lithium-rich lithium ferrite material. Different from Embodiment 1, a mass ratio of polyethylene oxide to Li₅FeO₄ was 1:100, a mass ratio of LIFSI to the Li₅FeO₄ was 2:100, and a mass ratio of a second coating layer to the Li₅FeO₄ was 3:100.

### Embodiment 15

The present embodiment provided a preparation method for a lithium-rich lithium ferrite material. Different from Embodiment 1, a mass ratio of polyethylene oxide to Li₅FeO₄ was 2:100, a mass ratio of LIFSI to the Li₅FeO₄ was 6:100, and a mass ratio of a second coating layer to the Li₅FeO₄ was 8:100.

### Embodiment 16

The present embodiment provided a preparation method for a lithium-rich lithium ferrite material. Different from Embodiment 1, a mass ratio of polyethylene oxide to Li₅FeO₄ was 5:100, a mass ratio of LIFSI to the Li₅FeO₄ was 8:100, and a mass ratio of a second coating layer to the Li₅FeO₄ was 13:100.

### Embodiment 17

The present embodiment provided a preparation method for a lithium-rich lithium ferrite material. Different from Embodiment 1, in step (5), a Li₅FeO₄ precursor coated with high-temperature coal tar pitch was placed in a sintering furnace for high-temperature calcination, the sintering furnace was heated to 500 °C at a heating rate of 5 °C/min and subjected to heat preservation for 2 h, a product was subjected to air jet pulverization and maintained at a dew point of less than -30 °C to obtain Li₅FeO₄@C, and a lithium-rich lithium ferrite material was finally obtained.

### Embodiment 18

The present embodiment provided a preparation method for a lithium-rich lithium ferrite material. Different from Embodiment 1, in step (5), a Li₅FeO₄ precursor coated with high-temperature coal tar pitch was placed in a sintering furnace for high-temperature calcination, the sintering furnace was heated to 700 °C at a heating rate of 5 °C/min and subjected to heat preservation for 2 h, a product was subjected to air jet pulverization and maintained at a dew point of less than -30 °C to obtain Li₅FeO₄@C, and a lithium-rich lithium ferrite material was finally obtained.

### Embodiment 19

The present embodiment provided a preparation method for a lithium-rich lithium ferrite material. Different from Embodiment 1, in step (5), a Li₅FeO₄ precursor coated with high-temperature coal tar pitch was placed in a sintering furnace for high-temperature calcination, the sintering furnace was heated to 450 °C at a heating rate of 5 °C/min and subjected to heat preservation for 2 h, a product was subjected to air jet pulverization and maintained at a dew point of less than -30 °C to obtain Li₅FeO₄@C, and a lithium-rich lithium ferrite material was finally obtained.

### Embodiment 20

The present embodiment provided a preparation method for a lithium-rich lithium ferrite material. Different from Embodiment 1, in step (1), a ratio of Fe to Li was maintained at 1:5.2 to obtain a mixed raw material, and a lithium-rich lithium ferrite material was finally obtained.

### Embodiment 21

The present embodiment provided a preparation method for a lithium-rich lithium ferrite material. Different from Embodiment 1, in step (1), a ratio of Fe to Li was maintained at 1:5.0 to obtain a mixed raw material, and a lithium-rich lithium ferrite material was finally obtained.

### Embodiment 22

The present embodiment provided a preparation method for a lithium-rich lithium ferrite material. Different from Embodiment 1, in step (1), a ratio of Fe to Li was maintained at 1:5.3 to obtain a mixed raw material, and a lithium-rich lithium ferrite material was finally obtained.

### Embodiment 23

The present embodiment provided a preparation method for a lithium-rich lithium ferrite material. Different from Embodiment 1, in step (1), a ratio of Fe to Li was maintained at 1:4.9 to obtain a mixed raw material, and a lithium-rich lithium ferrite material was finally obtained.

### Embodiment 24

The present embodiment provided a preparation method for a lithium-rich lithium ferrite material. Different from Embodiment 1, in step (6), a ratio of a polyethylene oxide monomer to LIFSI was 30:100, and a lithium-rich lithium ferrite material was finally obtained.

### Embodiment 25

The present embodiment provided a preparation method for a lithium-rich lithium ferrite material. Different from Embodiment 1, in step (6), a ratio of a polyethylene oxide monomer to LIFSI was 50:100, and a lithium-rich lithium ferrite material was finally obtained.

### Embodiment 26

The present embodiment provided a preparation method for a lithium-rich lithium ferrite material. Different from Embodiment 1, in step (6), a ratio of a polyethylene oxide monomer to LIFSI was 20:100, and a lithium-rich lithium ferrite material was finally obtained.

### Comparative Embodiment 1

The present comparative embodiment provided a preparation method for a lithium-rich lithium ferrite material. Different from Embodiment 1, step (6) was not included.

### Comparative Embodiment 2

The present comparative embodiment provided a preparation method for a lithium-rich lithium ferrite material. Different from Embodiment 1, steps (4) and (5) were not included.

### Comparative Embodiment 3

The present comparative embodiment provided a preparation method for a lithium-rich lithium ferrite material. Different from Embodiment 1, in step (1), the Fe₂O₃ was changed into ferric hydroxide.

### Comparative Embodiment 4

The present comparative embodiment provided a preparation method for a lithium-rich lithium ferrite material. Different from Embodiment 1, in step (6), the polyethylene oxide was changed into lithium aluminum titanium phosphate.

### 2. Test methods

Particle size test: A laser particle size tester was used to test the particle size of the lithium-rich lithium ferrite materials prepared in embodiments and comparative embodiments. Results were shown in Table 1.

### Capacity test:

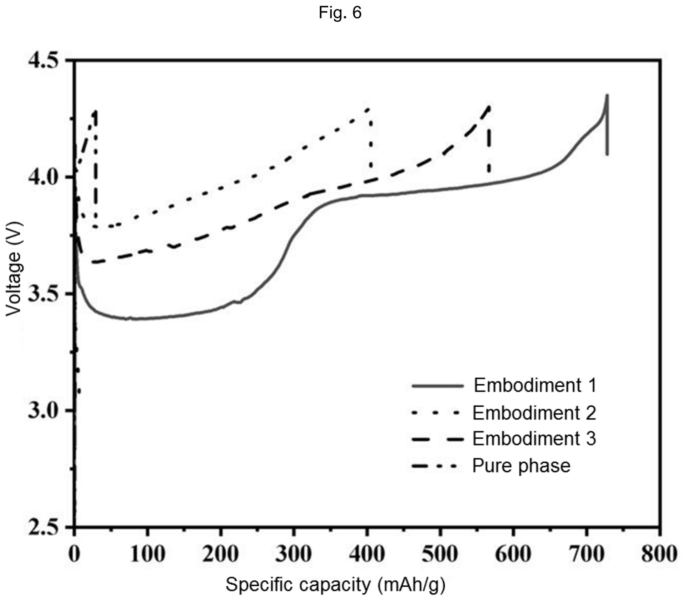

An electrochemical performance test was carried out by using by a button type half cell: The lithium-rich lithium ferrite materials prepared in embodiments and comparative embodiments or the pure-phase Li₅FeO₄ obtained in Embodiment 2 were used as a cathode material; the cathode material, conductive carbon black and PVDF (polyvinylidene fluoride) as a binder were prepared into a slurry at a ratio of 8:1:1 and then evenly coated on aluminum foil to prepare a cathode plate (electrode mixing, coating and other preparation processes were completed in the air); a lithium metal sheet was used as an anode plate, 1 mol/L LiPF₆ was used as an electrolyte, and a mixture of EC, DMC and EMC at a volume ratio of 1:1:1 was used as a solvent; and a battery shell, the cathode plates and anode plates, a diaphragm (PE double-layer ceramic diaphragm), a spring and a gasket were assembled into a button cell in a vacuum glove box. The electrochemical performance test was carried out, and the capacity test was carried out under the condition of 3.3-4.3 V. Results were shown in Table 1 and Fig. 6.

**Table 1**

| | D90 (µm) | Charging capacity (mAh/g) |
|---|---|---|
| Embodiment 1 | 4.8 | 728 |
| Embodiment 2 | 4.9 | 455 |
| Embodiment 3 | 5.1 | 526 |
| Embodiment 4 | 4.8 | 487 |
| Embodiment 5 | 5.0 | 634 |
| Embodiment 6 | 4.7 | 421 |
| Embodiment 7 | 4.9 | 509 |
| Embodiment 8 | 4.8 | 472 |
| Embodiment 9 | 4.6 | 622 |
| Embodiment 10 | 4.7 | 402 |
| Embodiment 11 | 5.0 | 516 |
| Embodiment 12 | 4.9 | 468 |
| Embodiment 13 | 4.7 | 614 |
| Embodiment 14 | 4.8 | 689 |
| Embodiment 15 | 4.9 | 588 |
| Embodiment 16 | 4.9 | 497 |
| Embodiment 17 | 4.8 | 721 |
| Embodiment 18 | 4.8 | 715 |
| Embodiment 19 | 4.8 | 624 |
| Embodiment 20 | 4.9 | 715 |
| Embodiment 21 | 4.9 | 720 |
| Embodiment 22 | 4.9 | 682 |
| Embodiment 23 | 4.9 | 673 |
| Embodiment 24 | 4.8 | 719 |
| Embodiment 25 | 5.0 | 659 |
| Embodiment 26 | 4.7 | 675 |
| Comparative Embodiment 1 | 4.9 | 231 |
| Comparative Embodiment 2 | 5.0 | 189 |
| Comparative Embodiment 3 | 5.4 | 253 |
| Comparative Embodiment 4 | 4.9 | 194 |
| Pure phase (without coating) | 4.8 | 28 |

### 3. Analysis of test results in embodiments and comparative embodiments

According to Table 1 and Fig. 6, small-particle lithium-rich lithium ferrite materials with better capacities could be obtained in Embodiments 1-26, where the capacity was highest in Embodiment 1. By comparing Embodiments 1-4, comparing Embodiments 5-8 and comparing Embodiments 9-12, it could be seen that the capacity was decreased when the content of the carbon layer was too high or too low. By comparing Embodiment 1 and Embodiments 13-16, it could be seen that the capacity will also be decreased when the content of the second coating layer was too high or too low. Meanwhile, by comparing Embodiment 1 and Embodiments 13-14, it could be seen that the capacity will also be decreased when the ratio of the polyethylene oxide to the lithium salt in the second coating layer was unreasonable. By comparing Embodiments 1, 5 and 9, it could be seen that although the battery capacity could be increased by using a conventional carbon source, the high-temperature coal tar pitch had a more obvious effect of increasing the capacity.

According to Table 1 and Fig. 6, by comparing Embodiment 1, Comparative Embodiment 1 and Comparative Embodiment 2, it could be seen that when the carbon layer and the second coating layer containing the polyethylene oxide and the lithium salt were coated simultaneously, the capacity was increased much higher than that when the carbon layer was coated separately or the second coating layer containing the polyethylene oxide and the lithium salt was coated separately. The comparison between Embodiment 1 and Comparative Embodiment 3 shown that when ferric oxide was selected as the carbon source, convenience was provided for obtaining the lithium-rich lithium ferrite material with a small particle size; and when ferric hydroxide was selected, the particle size of lithium-rich lithium ferrite was increased, and the capacity was significantly decreased. Commonly used solid electrolytes with air stability include lithium aluminum titanium phosphate (LATP), lithium aluminum germanium phosphate (LAGP), lithium lanthanum zirconium oxygen (LLZO) and the like. The comparison between Embodiment 1 and Comparative Embodiment 4 shown that, it's not just applying conventional solid electrolytes that significantly increased the battery capacity in the present disclosure.

It should be noted that the present disclosure is not limited to the above embodiments. The above embodiments are only embodiments, and embodiments that have essentially the same composition as the technical ideas and achieve the same effects within the scope of the technical solutions of the present disclosure are included in the technical scope of the present disclosure. In addition, without deviating from the scope of main purposes of the present disclosure, other embodiments constructed by applying various variations that may be thought of by persons skilled in the art to the embodiments or by combining some of constituent elements of the embodiments shall also be included in the scope of the present disclosure.

## Claims

1. A lithium-rich lithium ferrite material, comprising core-shell structured particles, wherein a core-shell structured particle comprises an inner core, a first coating layer coated outside the inner core and a second coating layer coated outside the first coating layer;
the inner core is Li₅FeO₄, the first coating layer is a carbon layer, and the second coating layer is a mixed layer containing polyethylene oxide and a lithium salt;
and a mass ratio of the first coating layer to the inner core is (2:100)-(10:100), and a mass ratio of the second coating layer to the inner core is (3:100)-(13:100).

2. The lithium-rich lithium ferrite material according to claim 1, wherein a mass ratio of the polyethylene oxide to the inner core is (0.5:100)-(5:100), and a mass ratio of the lithium salt to the inner core is (2:100)-(8:100);
optionally, the mass ratio of the polyethylene oxide to the inner core is (0.5:100)-(2:100), and the mass ratio of the lithium salt to the inner core is (2:100)-(4:100);
and/or, the mass ratio of the carbon layer to the inner core is (2:100)-(8:100);
and/or, the mass ratio of the carbon layer to the inner core is (5:100)-(7:100);
and/or, the lithium salt is selected from at least one of lithium bis(fluorosulfonyl)imide, lithium hexafluorophosphate and lithium fluoride;
and/or, a molecular weight of the polyethylene oxide is 50,000Da-150,000 Da.

3. The lithium-rich lithium ferrite material according to claim 1 or 2, wherein a particle size (D90) of the inner core is 3 µm-5.5 µm;
and/or, an average thickness of the first coating layer is 5 nm-10 nm;
and/or, an average thickness of the second coating layer is 5 nm-10 nm.

4. A preparation method for the lithium-rich lithium ferrite material according to any one of claims 1-3, comprising:
providing an inner core and a coating solution;
forming a first coating layer on a surface of the inner core to obtain an intermediate product;
and mixing the intermediate product with the coating solution, and forming a second coating layer on a surface of the first coating layer to obtain the lithium-rich lithium ferrite material;
wherein the coating solution comprises a solvent, polyethylene oxide and a lithium salt.

5. The preparation method according to claim 4, wherein the step of forming a first coating layer on a surface of the inner core comprises: subjecting the inner core, a carbon source and a grinding aid to mixing and ball milling, followed by carbonization treatment to obtain the intermediate product;
optionally, the carbon source is selected from at least one of polypropylene, glucose and high-temperature coal tar pitch;
and optionally, the carbonization treatment is carried out at a temperature of 500 °C-700 °C for 1.5 h-3 h.

6. The preparation method according to claim 4 or 5, further comprising preparing the inner core before forming the first coating layer on the surface of the inner core to obtain the intermediate product, wherein the preparation method comprises:
subjecting a first mixture of an iron source and a lithium source to calcination at 500 °C-700 °C for 24 h-48 h under an inert atmosphere;
optionally, the iron source is Fe₂O₃;
optionally, a particle size (D90) of the iron source is equal to or less than 400 nm;
and/or, the particle size (D90) of the iron source is 200 nm-400 nm;
optionally, the lithium source is selected from at least one of lithium oxide, lithium hydroxide and lithium carbonate;
optionally, the lithium source is a second mixture of lithium oxide and lithium hydroxide;
optionally, the lithium source is the second mixture of the lithium oxide and the lithium hydroxide at a molar ratio of (1.5-1)-(2.5:1);
and optionally, a molar ratio of Fe to Li in the first mixture is (1:5.0)-(1:5.2).

7. The preparation method according to any one of claims 4-6, wherein after mixing the intermediate product with the coating solution, the solvent is removed, grinding and sieving are carried out, and the second coating layer is formed on the surface of the first coating layer to obtain the lithium-rich lithium ferrite material.

8. The preparation method according to any one of claims 4-7, wherein in the coating solution, a mass ratio of the polyethylene oxide to the lithium salt is (20-50):100, preferably (30-40):100.

9. A cathode plate, comprising a current collector and an active material layer arranged on at least one side of the current collector, wherein the active material layer comprises the lithium-rich lithium ferrite material according to any one of claims 1-3 or the lithium-rich lithium ferrite material prepared by the preparation method according to any one of claims 4-8;
and optionally, a mass fraction of the lithium-rich lithium ferrite material in the active material layer is 2 wt%-8 wt%.

10. A secondary battery, comprising the cathode plate according to claim 9.

11. An electrical device, comprising the secondary battery according to claim 10.
